# EUROPÄISCHE PATENTANMELDUNG

(11) **EP 4 592 977 A1**
(43) Veröffentlichungstag der Anmeldung: **30.07.2025**
(21) Anmeldenummer: 24215554.7
(22) Anmeldetag: 26.11.2024
(51) Int. Cl.: G06V 40/60, G06V 40/70, H04N 23/50

(54) **VORRICHTUNG ZUM ERFASSEN VON BIOMETRISCHEN IDENTIFIZIERUNGSMERKMALEN EINER PERSON UND VERFAHREN ZU DEREN AUTOMATISIERTEM BETREIBEN**

(30) Priorität: 26.01.2024 DE 102024102319
(71) Anmelder: Bundesdruckerei GmbH, 10969 Berlin (DE)
(72) Erfinder: PETERS, Florian, Berlin (DE); SZEGVARI, Piotr, Potsdam (DE); SAUER, Tatjana, Berlin (DE); TSCHORN, Stefan, Gransee (DE); WARMBOLD, Ulrich, Berlin (DE)
(74) Vertreter: Bittner, Thomas L.

(57) **Zusammenfassung**

Die Erfindung betrifft ein Verfahren zum automatisierten Betreiben einer Vorrichtung (1) zum Erfassen von biometrischen Identifizierungsmerkmalen einer Person (2) sowie eine Vorrichtung. Bei dem Verfahren ist Folgendes vorgesehen: Bereitstellen der Vorrichtung (1) mit einer Kameraeinrichtung (4) zum Aufnehmen eines digitalen biometrischen Gesichtsbildes und einer Fingerabdruckeinrichtung (13), wobei die Kameraeinrichtung (4) zum Einstellen einer Aufnahmeposition und die Fingerabdruckeinrichtung (13) zum Einstellen einer Nutzungsposition für das Erfassen des Fingerabdrucks mittels einer Verlagerungseinrichtung (8) zumindest hinsichtlich einer jeweiligen Höhe oberhalb einer Bezugsebene (5) und unabhängig voneinander einstellbar sind; Verlagern der Kameraeinrichtung (4) mittels der Verlagerungseinrichtung (8) in eine aktuelle Aufnahmeposition, derart, dass zwischen der Kameraeinrichtung (4) und einer der Kameraeinrichtung (4) gegenüberliegend angeordneten Person (2) eine horizontale Sichtachse (6) ausgebildet wird; Bestimmen einer aktuellen Höhe der Kameraeinrichtung (4) über der Bezugsebene (5); Bereitstellen von Zuordnungsdaten, welche für eine Vielzahl von Personen unterschiedlicher Größe eine jeweilige größenangepasste Zuordnung zwischen einer Referenzhöhe der Kameraeinrichtung (4) und einer zugeordneten Referenzposition der Fingerabdruckeinrichtung (13) anzeigen; Bestimmen einer der aktuellen Höhe der Kameraeinrichtung (4) entsprechenden Referenzhöhe und einer dieser zugeordneten Referenzposition der Fingerabdruckeinrichtung (13); Verlagern der Fingerabdruckeinrichtung (13) in die zugeordnete Referenzposition und Erfassen des digitalen biometrischen Gesichtsbildes der Person (2) und / oder des digitalen Fingerabdrucks der Person (2).

## Beschreibung

Die Erfindung betrifft ein Verfahren zum automatisierten Betreiben einer Vorrichtung zum Erfassen von biometrischen Identifizierungsmerkmalen einer Person sowie eine Vorrichtung.

### Hintergrund

Solche Verfahren und Vorrichtungen werden genutzt, um von Personen ein oder mehrere verschiedene biometrische Identifizierungsmerkmale zu erfassen. Hierzu kann das Erfassen eines biometrischen Gesichtsbildes mit Hilfe einer digitalen Kameraeinrichtung gehören. Auch das Erfassen eines digitalen Fingerabdrucks mit Hilfe einer Fingerabdruckeinrichtung kann vorgesehen sein. Die Vorrichtung zum Erfassen der biometrischen Identifizierungsmerkmale ist hierzu beispielsweise mit der Kameraeinrichtung und / oder der Fingerabdruckeinrichtung ausgestattet.

Derartige Vorrichtungen zum Erfassen von biometrischen Identifizierungsmerkmalen werden zum Beispiel verwendet, um Personen anhand der biometrischen Merkmale zu erfassen und zu registrieren. So können solche Vorrichtungen beispielsweise in Meldeämtern dazu eingesetzt werden, die biometrischen Identifizierungsmerkmale für eine Person zu erfassen, um unter Verwendung der erfassten biometrischen Identifizierungsmerkmale ein Sicherheitsdokument wie Identitätskarte oder Reisepass zu erstellen, auf dem dann die biometrischen Identifizierungsmerkmale zumindest teilweise hinterlegt sind, zum Beispiel in Form elektrischer Daten in einem elektronischen Speicher des Sicherheitsdokuments und / oder eines aufgedruckten Gesichtsbildes.

Das Dokument US 2012 / 0293642 A1 betrifft eine Vorrichtung zum Erfassen biometrischer Identifizierungsmerkmale von Personen, wobei die Vorrichtung als ein Kiosk-Terminal ausgeführt ist. In einer Ausgestaltung sind an einer Trägereinrichtung der Vorrichtung eine Kameraeinrichtung zum Erfassen eines biometrischen Gesichtsbildes sowie ein Fingerabdrucksensor zum Erfassen eines digitalen Fingerabdrucks vorgesehen. Kameraeinrichtung und Fingerabdrucksensor sowie weitere Bedienelemente sind an einem verstellbaren Trägerbauteil der Trägereinrichtung aufgenommen, welches mit Hilfe einer Verlagerungseinrichtung höhenverstellbar ist, so dass hierbei Kameraeinrichtung, Fingerabdrucksensor sowie weitere Einrichtungen gemeinsam in der Höhe verstellt werden können, um eine Einstellung der Vorrichtung für die jeweils zu erfassende Person bereitzustellen.

### Zusammenfassung

Aufgabe der Erfindung ist es, ein Verfahren zum automatisierten Betreiben einer Vorrichtdung zum Erfassen von biometrischen Identifizierungsmerkmalen einer Person sowie eine Vorrichtung zum Erfassen von biometrischen Identifizierungsmerkmalen einer Person anzugeben, mit denen ein automatisierter Betrieb zur individuellen Anpassung der Vorrichtung für Personen unterschiedlicher Größe sowie Personen in unterschiedlichen Stellungen wie stehend oder sitzend erleichtert ist.

Zur Lösung ist ein Verfahren zum automatisierten Betreiben einer Vorrichtung zum Erfassen von biometrischen Identifizierungsmerkmalen einer Person nach dem unabhängigen Anspruch 1 geschaffen. Weiterhin ist eine Vorrichtung zum Erfassen von biometrischen Identifizierungsmerkmalen einer Person nach dem unabhängigen Anspruch 12 geschaffen. Ausgestaltungen sind Gegenstand von abhängigen Unteransprüchen.

In einer Ausführungsform ist ein Verfahren zum automatisierten Betreiben einer Vorrichtung zum Erfassen von biometrischen Identifizierungsmerkmalen einer Person geschaffen, welches Folgendes aufweist: Bereitstellen einer Vorrichtung zum Erfassen von biometrischen Identifizierungsmerkmalen einer Person, welche eine Kameraeinrichtung zum Aufnehmen eines digitalen biometrischen Gesichtsbildes und eine Fingerabdruckeinrichtung zum Erfassen eines digitalen Fingerabdrucks aufweist, wobei die Kameraeinrichtung zum Einstellen einer Aufnahmeposition für das Aufnehmen des digitalen biometrischen Gesichtsbildes und die Fingerabdruckeinrichtung zum Einstellen einer Nutzungsposition für das Erfassen des digitalen Fingerabdrucks mittels einer Verlagerungseinrichtung zumindest hinsichtlich einer jeweiligen Höhe oberhalb einer Bezugsebene und unabhängig voneinander einstellbar sind; Verlagern der Kameraeinrichtung mittels der Verlagerungseinrichtung in eine aktuelle Aufnahmeposition, derart, dass zwischen der Kameraeinrichtung und einer der Kameraeinrichtung gegenüberliegend angeordneten Person eine horizontale Sichtachse ausgebildet wird, entlang welcher das digitale biometrische Gesichtsbild für die Person mittels der Kameraeinrichtung aufnehmbar ist; Bestimmen einer aktuellen Höhe der Kameraeinrichtung über der Bezugsebene in der aktuellen Aufnahmeposition; Bereitstellen von Zuordnungsdaten, welche für eine Vielzahl von Personen unterschiedlicher Größe eine jeweilige größenangepasste Zuordnung zwischen einer Referenzhöhe der Kameraeinrichtung und einer zugeordneten Referenzposition der Fingerabdruckeinrichtung anzeigen; Bestimmen einer der aktuellen Höhe der Kameraeinrichtung entsprechenden Referenzhöhe und einer dieser zugeordneten Referenzposition der Fingerabdruckeinrichtung aus den Zuordnungsdaten; Verlagern der Fingerabdruckeinrichtung in die zugeordnete Referenzposition mittels der Verlagerungseinrichtung und Erfassen des digitalen biometrischen Gesichtsbildes der Person mittels der Kameraeinrichtung und / oder des digitalen Fingerabdrucks der Person mittels der Fingerabdruckeinrichtung.

Nach einem weiteren Aspekt ist eine Vorrichtung zum Erfassen von biometrischen Identifizierungsmerkmalen einer Person geschaffen, welches Folgendes aufweist: eine Kameraeinrichtung zum Aufnehmen eines digitalen biometrischen Gesichtsbildes; eine Fingerabdruckeinrichtung zum Erfassen eines digitalen Fingerabdrucks aufweist und eine Verlagerungseinrichtung, wobei die Kameraeinrichtung zum Einstellen einer Aufnahmeposition für das Aufnehmen des digitalen biometrischen Gesichtsbildes und die Fingerabdruckeinrichtung zum Einstellen einer Nutzungsposition für das Erfassen des digitalen Fingerabdrucks mittels der Verlagerungseinrichtung zumindest hinsichtlich einer jeweiligen Höhe oberhalb einer Bezugsebene und unabhängig voneinander einstellbar sind. Die Vorrichtung ist für Folgendes eingerichtet: Verlagern der Kameraeinrichtung mittels der Verlagerungseinrichtung in eine aktuelle Aufnahmeposition, derart, dass zwischen der Kameraeinrichtung und einer der Kameraeinrichtung gegenüberliegend angeordneten Person eine horizontale Sichtachse ausgebildet wird, entlang welcher das digitale biometrische Gesichtsbild für die Person mittels der Kameraeinrichtung aufnehmbar ist; Bestimmen einer aktuellen Höhe der Kameraeinrichtung über der Bezugsebene in der aktuellen Aufnahmeposition; Bereitstellen von Zuordnungsdaten, welche für eine Vielzahl von Personen unterschiedlicher Größe eine jeweilige größenangepasste Zuordnung zwischen einer Referenzhöhe der Kameraeinrichtung und einer zugeordneten Referenzposition der Fingerabdruckeinrichtung anzeigen; Bestimmen einer der aktuellen Höhe der Kameraeinrichtung entsprechenden Referenzhöhe und einer dieser zugeordneten Referenzposition der Fingerabdruckeinrichtung aus den Zuordnungsdaten; Verlagern der Fingerabdruckeinrichtung in die zugeordnete Referenzposition mittels der Verlagerungseinrichtung und Erfassen des digitalen biometrischen Gesichtsbildes der Person mittels der Kameraeinrichtung und / oder des digitalen Fingerabdrucks der Person mittels der Fingerabdruckeinrichtung.

Mit Hilfe des Verfahrens und der Vorrichtung ist es ermöglicht, beim Erfassen eines oder mehrerer verschiedener biometrischer Identifizierungsmerkmale für Personen die Vorrichtung automatisiert an Personen unterschiedlicher Größe anzupassen, so dass die biometrischen Identifizierungsmerkmale mittels der Kameraeinrichtung und / oder der Fingerabdruckeinrichtung sicher und effizient sowie bequem für die jeweilige Person erfasst werden können. Die Vorrichtung wird automatisiert an die Körperproportionen der Person angepasst, für die aktuell die biometrischen Identifizierungsmerkmale erfasst werden sollen, insbesondere hinsichtlich des Höhenabstands zwischen Gesicht und horizontal angewinkeltem Unterarm.

Die aktuelle Höhe der Kameraeinrichtung kann als der Höhenabstand der horizontalen Sicht- oder Aufnahmeachse über der Bezugsebene bestimmt werden, wenn die Kameraeinrichtung in der aktuellen Aufnahmeposition angeordnet ist. Bei dieser oder anderen Ausführungsformen kann die Kameraeinrichtung in der aktuellen Aufnahmeposition derart angeordnet werden, dass die Sicht- oder Aufnahmeachse zwischen einer Aufnahmeoptik der Kameraeinrichtung und dem Augenpaar der Person im Wesentlichen horizontal verläuft. Die aktuelle Höhe der Kameraeinrichtung, insbesondere der Aufnahmeoptik über der Bezugsebene entspricht hierbei dem Abstand zwischen Bezugsebene und Kameraeinrichtung in vertikaler Richtung.

Bei diese oder anderen Ausgestaltungen kann die Bezugsebene durch eine Standfläche gebildet sein, auf der die Person insbesondere stehend oder sitzend angeordnet ist, wobei eine sitzende Position der Person beispielsweise durch Sitzen auf einem Stuhl oder in einem Rollstuhl eingenommen werden kann. Auf der Standfläche kann auch die Vorrichtung zum Erfassen von biometrischen Identifizierungsmerkmalen stehen.

Mittels der Zuordnungsdaten kann der jeweiligen Referenzhöhe der Kameraeinrichtung als Referenzposition zumindest eine Referenzhöhe der Fingerabdruckeinrichtung über der Bezugsebene zugeordnet werden. So ist auch die Referenzhöhe für die Fingerabdruckeinrichtung hinsichtlich der Bezugsebene definiert. Alternativ oder ergänzend können die Zuordnungsdaten Informationen enthalten, welche einen Abstand zwischen Kameraeinrichtung und Fingerabdruckeinrichtung in vertikaler Richtung für die Personen unterschiedlicher Grö-ße jeweils anzeigen.

In den Zuordnungsdaten können die Daten in Tabellenform einander zugeordnet sein.

Der Fingerabdruckeinrichtung, die auch als Fingerabdrucksensoreinrichtung bezeichnet werden kann, kann eine Bedienauflage der Vorrichtung zum Erfassen von biometrischen Identifizierungsmerkmalen zugeordnet werden, mit welcher der Person zum Erfassen des digitalen Fingerabdrucks eine horizontale Auflagefläche für eine Unterarm- und Handauflage bereitgestellt wird. Hierbei ist zumindest eine Referenzhöhe der Fingerabdruckeinrichtung über der Bezugsebene eingerichtet, der Person für das Erfassen des digitalen Fingerabdrucks auf der horizontalen Auflagefläche eine ergonomisch bequeme Unterarm- und Handauflage zu ermöglichen, bei der der relativ zum Oberarm an- oder abgewinkelte Unterarm der Person im Wesentlichen in horizontaler Richtung verläuft. Dieses ermöglicht der Person eine bequeme und sichere Auflage des Unterarms sowie der Hand beim Bedienen der Fingerabdruckeinrichtung zum Erfassen des digitalen Fingerabdrucks. Die Bedienauflage kann zum Beispiel mittels eines höhenverstellbaren Bedienpults der Vorrichtung bereitgestellt sein.

Die Vorrichtung zum Erfassen von biometrischen Identifizierungsmerkmalen der Person kann mit einer Eingabeeinrichtung bereitgestellt werden, welche auf der horizontalen Auflagefläche und / oder benachbart hierzu angeordnet und eingerichtet ist, eine Benutzereingabe der Person zu Erfassen. Die Eingabeeinrichtung kann beispielsweise eine Tastatur und / oder ein berührungssensitives Eingabefeld aufweisen, die es der Person ermöglichen, Benutzereingaben zu machen. Hierbei kann vorgesehen sein, dass die Eingabeeinrichtung konfiguriert ist, eine Unterschrift der Person zu erfassen, beispielsweise mittels eines elektronisches (berührungssensitiven) Unterschriftsfeld, welches die Person mittels Finger und / oder einem Eingabestift bedienen kann.

Die Zuordnungsdaten können Folgendes aufweisen: erste Zuordnungsdaten, welche Personen unterschiedlicher Größe in stehender Position eine jeweilige größenangepasste Zuordnung zwischen Referenzhöhe der Kameraeinrichtung und zugeordneten Referenzposition der Fingerabdruckeinrichtung bezüglich der Bezugsebene anzeigen; und zweite Zuordnungsdaten, welche von den ersten Zuordnungsdaten verschieden sind und Personen unterschiedlicher Größe in sitzender Position eine jeweilige größenangepasste Zuordnung zwischen Referenzhöhe der Kameraeinrichtung und zugeordneten Referenzposition der Fingerabdruckeinrichtung bezüglich der Bezugsebene anzeigen.

Diese Ausgestaltung ermöglicht für den automatisierten Betrieb der Vorrichtung eine Unterscheidung zwischen stehenden und sitzenden Personen, wobei Letzteres insbesondere auch das Erfassen von Personen im Rollstuhl unterstützt. Beim Betrieb der Vorrichtung zum Erfassen der biometrischen Identifizierungsmerkmale kann in diesem Zusammenhang vorgesehen sein, eine Benutzereingabe zu erfassen, welche anzeigt, ob die Person der Vorrichtung gegenüber steht oder sitzt. Als Reaktion hierauf kann eine Vorauswahl der ersten oder zweiten Zuordnungsdaten ausgeführt werden, um danach die Referenzhöhe der Kameraeinrichtung und die zugeordnete Referenzposition der Fingerabdruckeinrichtung innerhalb der vorausgewählten Zuordnungsdaten zu bestimmen. Alternativ kann vorgesehen sein, dass nach dem Bestimmen der aktuellen Höhe der Kameraeinrichtung über der Bezugsebene in den ersten und den zweiten Zuordnungsdaten nach der der aktuellen Höhe der Kameraeinrichtung entsprechenden Referenzhöhe gesucht wird, um so die zugeordnete Referenzposition der Fingerabdruckeinrichtung zu bestimmen.

Die Vorrichtung zum Erfassen von biometrischen Identifizierungsmerkmalen der Person kann mit einem Ständerbauteil bereitgestellt werden, an welchem die Kameraeinrichtung, die Fingerabdruckeinrichtung und die Verlagerungseinrichtung angeordnet sind. Das unabhängige Verlagern von Kameraeinrichtung und Fingerabdruckeinrichtung kann entlang einer gemeinsamen aufrechtstehenden Längsachse des Ständerbauteils erfolgen. Alternativ kann vorgesehen sein, Kameraeinrichtung und Fingerabdruckeinrichtung entlang beabstandeter aufrechtstehender Bewegungsachsen zu verlagern.

Die Vorrichtung zum Erfassen von biometrischen Identifizierungsmerkmalen der Person kann als Kiosk-Terminal bereitgestellt werden. Das Kiosk-Terminal kann ein örtlich fixiertes Terminal oder ein örtlich verlagerbares (mobiles) Terminal sein.

Zumindest ein Teil der Zuordnungsdaten kann im Rahmen einer Messreihe für Personen unterschiedlicher Größe mittels einer Messeinrichtung experimentell bestimmt werden, wobei die Messeinrichtung eingerichtet ist, die Referenzhöhe für die Kameraeinrichtung und die dieser zugeordnete Referenzposition der Fingerabdruckeinrichtung zu messen, insbesondere bezüglich der Höhenposition der Fingerabdruckeinrichtung und / oder deren Abstand zur Position der Kameraeinrichtung. Das experimentelle Bestimmen eines Teils der oder aller Zuordnungsdaten ermöglicht es, eine große Vielzahl von Personen zu berücksichtigen, wodurch die individuelle Anpassung der Höheneinstellungen für Kameraeinrichtung und Fingerabdruckeinrichtung beim Betrieb der Vorrichtung zum Erfassen der biometrischen Identifizierungsmerkmale optimiert wird. Hierbei kann vorgesehen sein, ursprünglich experimentell bestimmte Zuordnungsdaten anhand weiterer Messungen später Stück für Stück zu ergänzen.

In Verbindung mit der experimentellen Bestimmung der Zuordnungsdaten kann beim Messen für die Personen vorgesehen sein, für die erfassten Messungen eine Mittelwertbildung anzuwenden.

Alternativ kann vorgesehen sein, die Zuordnungsdaten, welche für die Personen die Zuordnungspaare zwischen Referenzhöhe der Kameraeinrichtung und zugeordneter Referenzposition der Fingerabdruckeinrichtung umfassen, anhand der an sich bekannten Proportionsregeln für den menschlichen Körper zu bestimmen. Hierbei wird angenommen, dass ein Mensch in etwa die Höhe von acht Köpfen aufweist. Die Kopfhöhe dient so als eine Art Maßeinheit für die Proportionen des menschlichen Körpers. Die Maßeinheit Kopf verteilt sich über die Länge des Menschen hierbei wie folgt ("Achtelprinzip"): Kopf; von Kinn bis zu den Brustwarzen; von den Brustwarzen bis zum Nabel; vom Nabel bis zum Schritt; vom Schritt bis zur Mitte der Oberschenkel; von der Mitte der Oberschenkel bis knapp unter die Knie; von den Knien bis zur Mitte der Unterschenkel; und von der Mitte der Unter-schenkel bis zu den Fußsohlen.

Die Kameraeinrichtung kann beim Verlagern in die aktuelle Aufnahmeposition derart verlagert werden, dass die horizontale Sichtachse zum Aufnehmen des digitalen biometrischen Gesichtsbildes im Wesentlichen auf Höhe der Augen der Person angeordnet wird.

Es kann vorgesehen sein, dass mittels einer Personensensor- oder Personenerfassungseinrichtung eine Annäherung der Person an die Vorrichtung detektiert wird und die Kameraeinrichtung als Reaktion hierauf mittels der Verlagerungseinrichtung in die aktuelle Aufnahmeposition verlagert wird. Auf diese Weise kann das Verfahren zum Erfassen des biometrischen Identifizierungsmerkmals für eine Person automatisiert gestartet werden, wenn sich die Person der Vorrichtung nähert oder diese als der Vorrichtung gegenüberliegend stehend oder sitzend detektiert wird.

Es kann vorgesehen sein, die Vorrichtung hinsichtlich der Zuordnungsdaten als lernendes System auszugestalten. Hierbei können anfängliche Zuordnungsdaten bereitgestellt werden, insbesondere in einer Speichereinrichtung. Anfangs erfolgt die automatisierende Steuerung der Vorrichtung bezüglich der Höheneinstellung von Kameraeinrichtung und Fingerabdruckeinrichtung / Bedienauflage mit Fingerabdruckeinrichtung basierend auf den anfänglichen Zuordnungsdaten. Der Person kann sodann die Möglichkeit gegeben werden, eine Höheneinstellung für die Fingerabdruckeinrichtung / die Bedienauflage mittels Benutzereingabe zu verändern, also beispielsweise die Bedienauflage nach oben oder unten zu verstellen, wenn die geänderte Stellung für die Person hinsichtlich des Bedienkomforts bequemer oder angenehmer ist, um die Fingerabdruckeinrichtung zu bedienen. Die anfänglichen Zuordnungsdaten können dann dahingehend geändert werden, dass die von der Person 2 eingestellte Höhe für die Fingerabdruckeinrichtung / die Bedienauflage den anfänglichen Wert für die Referenzhöhe ersetzt. Auf diese Weise kann die Vorrichtung im Verlauf des Betriebs weiter optimiert werden.

Die im Zusammenhang mit dem Verfahren zum automatisierten Betreiben einer Vorrichtung zum Erfassen von biometrischen Identifizierungsmerkmalen (ID-Merkmale) einer Person erläuterten Merkmale können in Verbdingung mit der Vorrichtung entsprechend vorgesehen sein.

### Beschreibung von Ausführungsbeispielen

Im Folgenden werden weitere Aspekte anhand von Ausführungsbeispielen unter Bezugnahme auf Figuren einer Zeichnung erläutert. Hierbei zeigen:
- Fig. 1: eine schematische Darstellung einer Vorrichtung zum Erfassen von biometrischen Identifizierungsmerkmalen einer Person;
- Fig. 2: eine schematische Darstellung der Vorrichtung zum Erfassen von biometrischen Identifizierungsmerkmalen einer Person nach Fig. 1 in einer Ausgangsstellung;
- Fig. 3: eine schematische Darstellung der Vorrichtung zum Erfassen von biometrischen Identifizierungsmerkmalen einer Person aus Fig. 2 mit einer ausgerichteten Kameraeinrichtung;
- Fig. 4: eine schematische Darstellung der Vorrichtung zum Erfassen von biometrischen Identifizierungsmerkmalen einer Person nach Fig. 2 mit einer in der Höhe eingestellten Bedienauflage mit Fingerabdruckeinrichtung und
- Fig. 5: eine schematische Darstellung zu Proportionsregeln des menschlichen Körpers.

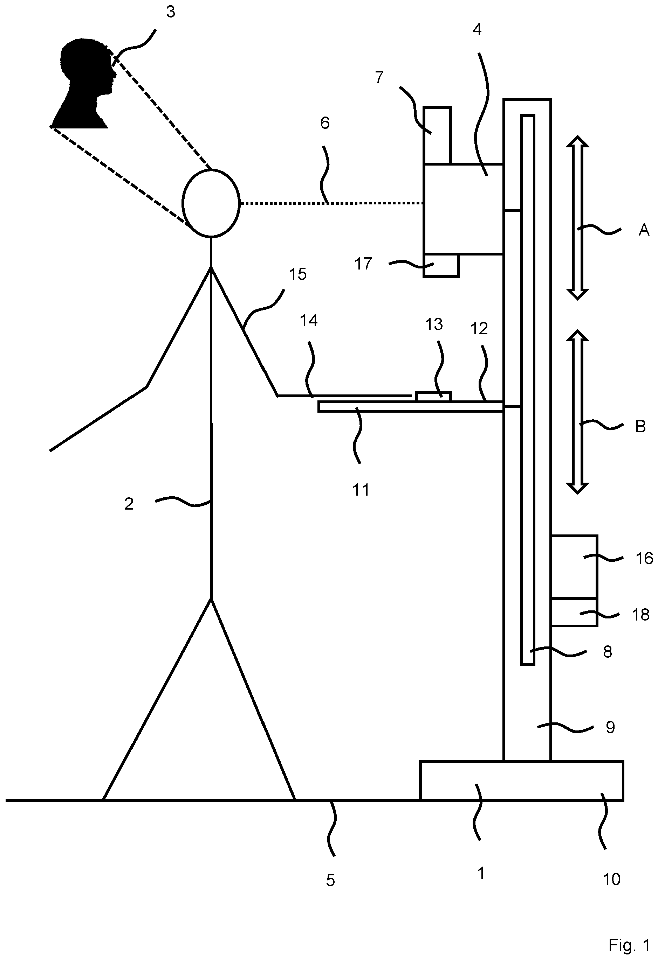

Fig. 1 zeigt eine schematische Darstellung einer Vorrichtung 1 zum Erfassen von biometrischen Identifizierungsmerkmalen einer Person 2, die im gezeigten Beispiel der Vorrichtung 1 gegenüber in stehender Position angeordnet ist. Wie Fig. 1 zeigt, hat die Person 2 das Gesicht 3 der Vorrichtung 1 zugewandt, konkret einer Kameraeinrichtung 4, die eingerichtet ist, ein digitales biometrisches Gesichtsbild für die Person 2 aufzunehmen. Hierfür ist die Kameraeinrichtung 4 bezüglich der Höhe über einer Bezugsebene 5, auf der im gezeigten Beispiel die Person 2 sowie die Vorrichtung 1 stehen, so angeordnet, dass zwischen der Kameraeinrichtung 4, insbesondere einer Aufnahmeoptik die Kameraeinrichtung 4, und dem Gesicht 3 der Person 2 eine horizontale Sicht- oder Aufnahmeachse 6 ausgebildet ist, entlang welcher die Kameraeinrichtung 4 das digitale biometrische Gesichtsbild derart aufnehmen kann, dass aus den digitalen Daten für das Gesichtsbild biometrische Gesichtsmerkmale bestimmt werden können.

Bei der Verwendung der Kameraeinrichtung 4 zum Aufnehmen von Gesichtsbildern wird wahlweise eine Beleuchtungseinrichtung 7 genutzt, um die Person 2 auszuleuchten, insbesondere im Bereich des Gesichts 3. Bei dem dargestellten Ausführungsbeispiel ist die Beleuchtungseinrichtung 7 an der Kameraeinrichtung 4 angeordnet, so dass die Beleuchtungseinrichtung 7 zusammen mit der Kameraeinrichtung 4 höhenverstellbar an der Vorrichtung 1 angeordnet ist. Alternativ kann vorgesehen sein, dass die Beleuchtungseinrichtung 7 unabhängig von der Kameraeinrichtung 4 verlagerbar ist. Auch eine ortsfeste Montage der Beleuchtungseinrichtung 7 an der Vorrichtung 1 kann vorgesehen sein.

Zum Einstellen der Höhe der Kameraeinrichtung 4 über der Bezugsebene 5 weist die Vorrichtung 1 zum Erfassen von biometrischen Identifizierungsmerkmalen der Person 2 eine Verlagerungseinrichtung 8 auf, die bei dem gezeigten Beispiel an einem Ständerbauteil 9 gebildet ist, welcher seinerseits auf einem Fußbauteil 10 angeordnet ist.

In der gezeigten Ausgestaltung ist die Vorrichtung 1 als ein Kiosk-Terminal zum Erfassen von biometrischen Identifizierungsmerkmalen von Personen ausgestaltet, welches auf der Bezugsebene 5 ortsfest oder mobil angeordnet ist.

Mit Hilfe der Verlagerungseinrichtung 8 ist weiterhin eine Bedienauflage 11 höhenverstellbar hinsichtlich der Bezugsebene 5, was unabhängig von einer Einstellung der Kameraeinrichtung 4 ausführbar ist. Die Bedienauflage 11 ist beispielhaft ebenfalls an dem Ständerbauteil 9 höhenverstellbar aufgenommen und stellt eine horizontale Auflagefläche 12 bereit, auf der eine Fingerabdruck- oder Fingerabdrucksensoreinrichtung 13 angeordnet ist, mit der für die Person 2 ein digitaler Fingerabdruck erfasst werden kann.

Zu diesem Zweck ist die Bedienauflage 11 mit Hilfe der Verlagerungseinrichtung gemäß Fig. 1 in einer Höhe über der Bezugsebene 5 angeordnet, die es der Person 2 ermöglicht, eine ergonomische und bequeme Position zum Bedienen der Fingerabdruckeinrichtung 13 einzunehmen, bei der ein Unterarm 14 in im Wesentlichen horizontaler Lage auf der horizontalen Auflagefläche 12 angeordnet wird, was eine bequeme Bedienung der Fingerabdruckeinrichtung 13 mit den Fingern ermöglicht. Der Unterarm 14 ist hierbei gegenüber dem Oberarm 15 abgewinkelt.

Mit Hilfe der Vorrichtung 1 ist es so ermöglicht, die Kameraeinrichtung 4 sowie die Fingerabdruckeinrichtung 13 auf der Bedienauflage 11 unabhängig und getrennt voneinander hinsichtlich der Höhe über der Bezugsebene 5 einzustellen, derart, dass das Aufnehmen des digitalen biometrischen Gesichtsbildes wie auch das Erfassen des digitalen Fingerabdrucks mittels der Fingerabdruckeinrichtung 13 korrekt und für die Person 2 bequem erfolgen können. Die Höhenverstellbarkeit für Kameraeinrichtung 4 und Fingerabdruckeinrichtung 13 (auf der Bedienauflage 11) ist in Fig. 1 schematisch anhand von Pfeilen A und B dargestellt, wobei Bereiche der Höhenverstellbarkeit je nach Anwendungsfall konfigurierbar sind.

Zur Steuerung einzelner Betriebsfunktionen der Vorrichtung 1 ist eine Steuereinrichtung 16 vorgesehen. Beispielsweise kann mit der Steuereinrichtung 16 die Höhenverstellung von Kameraeinrichtung 4 und Bedienauflage 11 mit Fingerabdruckeinrichtung 13 mittels der Verlagerungseinrichtung 8 gesteuert werden. Mit der Steuereinrichtung 16 und / oder einer weiteren Steuereinrichtung (nicht dargestellt) können weitere Funktionen gesteuert werden, beispielsweise das Erfassen des digitalen biometrischen Gesichtsbildes mittels der Kameraeinrichtung 4, das Betätigen der Beleuchtungseinrichtung 7 und / oder das Erfassen des digitalen Fingerabdrucks mit der Fingerabdruckeinrichtung 13.

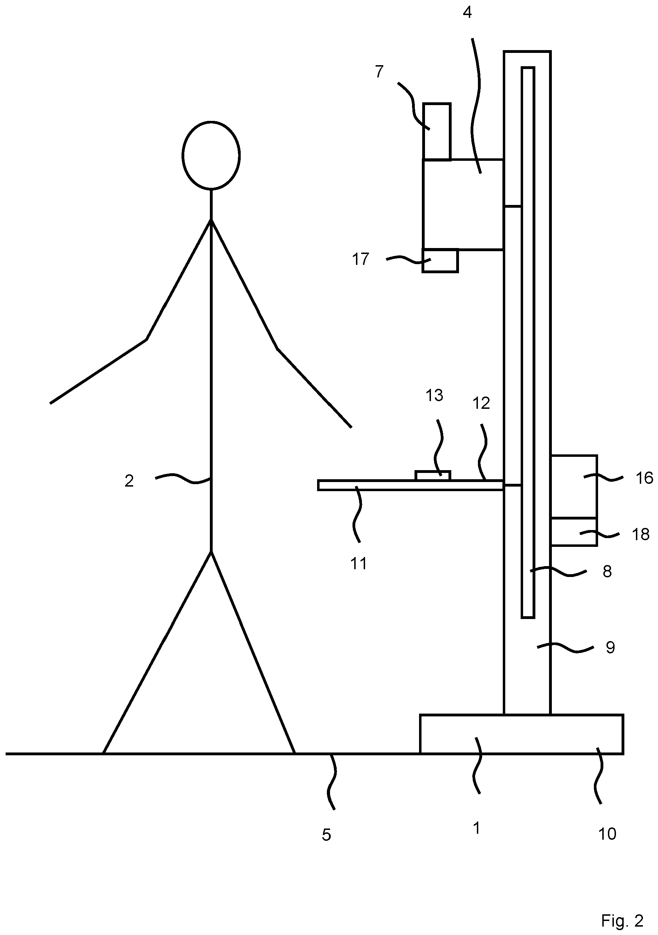

Bei der Vorrichtung 1 zum Erfassen von biometrischen Identifizierungsmerkmalen einer Person gemäß Fig. 1 ist weiterhin eine Personensensor- oder Personendetektionseinrichtung 17 vorgesehen, die beispielsweise mit einem kontaktlosen Näherungssensor ausgebildet sein kann und eingerichtet ist, die Annäherung der Person 2 an die Vorrichtung 1 und / oder die Präsenz der Person 2 gegenüber der Vorrichtung zu detektieren. Hierauf kann dann der Prozess zum Erfassen der biometrischen Identifizierungsmerkmale automatisch getriggert werden, was nachfolgend unter Bezugnahme auf die Fig. 2 bis 4 weiter erläutert wird. Bei dem gezeigten Ausführungsbeispiel ist die Personensensoreinrichtung 17 an der Kameraeinrichtung 4 angeordnet und so mit dieser zusammen höhenverstellbar an dem Ständerbauteil 9 aufgenommen. Alternativ kann die Personensensoreinrichtung 17 getrennt von der Kameraeinrichtung 4 an der Vorrichtung 1 angeordnet sein, zum Beispiel ortsfest oder verlagerbar an dem Ständerbauteil 9.

Die Steuereinrichtung 16 umfasst gemäß dem Ausführungsbeispiel in Fig. 1 eine Speichereinrichtung 18, die eingerichtet ist, elektronische Daten zu speichern. Hiervon umfasst sein können zum Beispiel Steuerungsdaten zum Steuern des Betriebs von Kameraeinrichtung 4 und / oder Fingerabdruckeinrichtung 13 beim Erfassen der biometrischen Identifizierungsmerkmale.

Auch Zuordnungsdaten können in der Speichereinrichtung 18 hinterlegt sein, die für Personen unterschiedlicher Größe eine der jeweiligen Größe angepasste Zuordnung zwischen einer Referenzhöhe der Kameraeinrichtung 4 und einer zugeordneten Referenzposition, insbesondere Referenzhöhe der Fingerabdruckeinrichtung 13 anzeigen. Die Höhenangaben können sich zum Beispiel auf die Bezugsebene 5 beziehen.

Die Zuordnungsdaten geben damit insbesondere an, in welchem Abstand die Fingerabdruckeinrichtung 13 in Bezug auf die horizontale Sicht- oder Aufnahmeachse 6 (bzw. die entsprechende Höhe der Kameraeinrichtung 4) anzuordnen ist, um der Person 2 eine bequeme und ergonomisch angepasste Position beim Bedienen der Fingerabdruckeinrichtung 13 zu ermöglichen, derart, dass hierbei der gegenüber dem Oberarm 15 abgewinkelte Unterarm 14 in im Wesentlichen horizontaler Lage gehalten werden kann, wobei der Unterarm 14 hierbei auf der Bedienauflage 11 zur Auflage kommt.

Die Zuordnungsdaten können zwischen stehender und sitzender Position der Person 2 unterscheiden, so dass insbesondere auch für Rollstuhlfahrer eine entsprechende Höheneinstellung für Kameraeinrichtung 4 und Fingerabdruckeinrichtung 13 automatisiert vorgenommen werden kann.

Unter Bezugnahme auf die Fig. 2 bis 4 wird im Folgenden der automatisierte Betrieb der Vorrichtung 1 zum Erfassen biometrischer Identifizierungsmerkmale der Person 2 weiter erläutert.

In Fig. 2 nähert sich die Person 2 der Vorrichtung 1, um schließlich dieser gegenüber zu stehen, was mit Hilfe der Personensensoreinrichtung 17 detektiert wird. Die Kameraeinrichtung 4 sowie die Fingerabdruckeinrichtung 13 auf der Bedienauflage 11 sind zu diesem Zeitpunkt in einer jeweiligen Ausgangs- oder Ruhestellung bezüglich der Höhe über der Bezugseben 5 angeordnet.

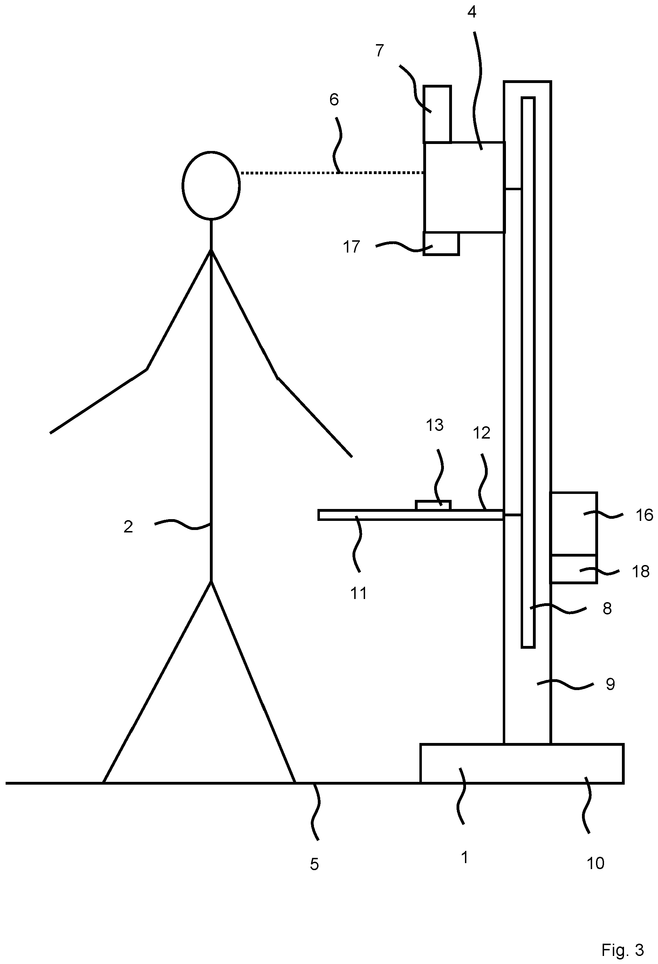

Als Reaktion auf das Erfassen der Annährung oder der Präsenz der Person 2 wird zunächst die Kameraeinrichtung 4 mit Hilfe der Verlagerungseinrichtung 8 höhenverstellt. Während dieser Höhenverstellung erfasst die Kameraeinrichtung 4 mehrfach digitale Bilder und bestimmt, ob hieraus ein digitales biometrisches Gesichtsbild bestimmbar ist, welches die Bestimmung von biometrischen Gesichtsmerkmalen ermöglicht. Wird festgestellt, dass eine Bildaufnahme diese Voraussetzung nicht erfüllt, erfolgt eine weitere Höhenverstellung. Wird sodann bestimmt, dass eine weitere Bildaufnahme den Voraussetzungen für ein digitales biometrisches Gesichtsbild genügt, ist die Kameraeinrichtung 4 in Bezug auf die Person 2 in einer Höhe über der Bezugsebene 5 angeordnet, in welcher die horizontale Sicht- oder Aufnahmeachse 6 ausgebildet ist (vgl. Fig. 3). Der Prozess zum Einstellen der Höhe der Kameraeinrichtung 4 ist damit abgeschlossen.

Sodann wird auf die Zuordnungsdaten zugegriffen, die in der Speichereinrichtung 18 und / oder einer distalen Speichereinrichtung (nicht dargestellt) angeordnet sind, mit der die Steuereinrichtung 16 kabelgebunden oder kabellos elektronische Daten austauschen kann. In den Zuordnungsdaten wird für die Höhe, in welcher die Kameraeinrichtung 4 gemäß der Darstellung in Fig. 3 dann angeordnet ist, eine entsprechende Referenzhöhe bestimmt, die gleich der aktuellen Höhe der Kameraeinrichtung 4 ist oder dieser innerhalb vorgebbarer Fehlergrenzen entspricht. Aus den Zuordnungsdaten wird für diese Referenzhöhe dann die zugeordnete Referenzposition (insbesondere Referenzhöhe) für die Fingerabdruckeinrichtung 13 bestimmt. Alternativ oder ergänzend können die Zuordnungsdaten die zugeordnete Referenzposition auch für die Bedienauflage 11 und / oder die horizontale Auflagefläche 12 angeben, welche dann für die Position (Höhe) Fingerabdruckeinrichtung 13 stehen. Zweck der zugeordneten Referenzposition ist es, die Fingerabdruckeinrichtung 13 in Bezug auf die Kameraeinrichtung 4 derart hinsichtlich ihrer Höhe einzustellen, dass die Person 2 die in Fig. 1 gezeigte ergonomische und bequeme Position zum Bedienen der Fingerabdruckeinrichtung 13 einnehmen kann, also der Unterarm 14 in im Wesentlichen horizontaler Lage gehalten werden kann.

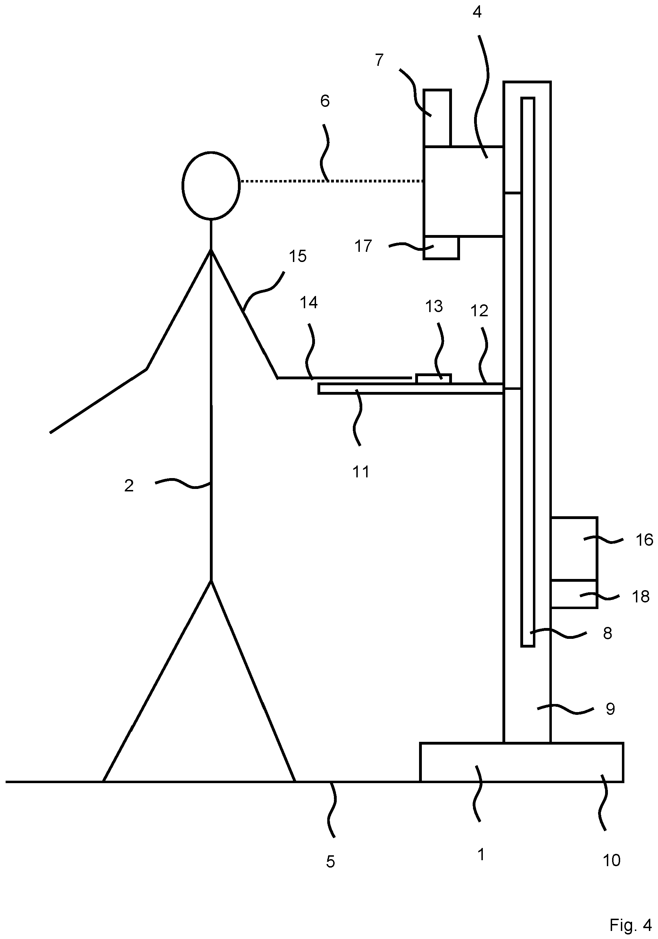

Nach dem Bestimmen der zugeordneten Referenzposition (insbesondere Referenzhöhe) aus den Zuordnungsdaten wird die Fingerabdruckeinrichtung 13 in die in Fig. 4 gezeigte Höhenstellung verlagert, was bei dem gezeigten Ausführungsbeispiel mit Hilfe der Verlagerung der Bedienauflage 11 mittels der Verlagerungseinrichtung 8 ausgeführt wird. Sodann können wir für die Person 2 biometrische Identifizierungsmerkmale mittels der Kameraeinrichtung 4 und / oder die Fingerabdruckeinrichtung 13 erfasst werden. Die Vorrichtung 1 wurde hierzu hinsichtlich der Positionierung von Kameraeinrichtung 4 und Fingerabdruckeinrichtung 13 vorab automatisiert eingestellt.

Die Zuordnungsdaten können auf unterschiedliche Art und Weise bestimmt werden. Beispielsweise kann vorgesehen sein, für Personen unterschiedlicher Größe, sei es in stehender und / oder sitzender Stellung, experimentell Messdaten an einer der Vorrichtung 1 zum Erfassen von biometrischen Identifizierungsmerkmalen entsprechenden Vorrichtung zu detektieren. Hierzu würde dann jeweils die Höhe der Kameraeinrichtung 4 sowie der Fingerabdruckeinrichtung 13 / der Bedienauflage 11 mittels zugeordneter Messeinrichtung erfasst und gespeichert. Derart experimentell erfasste Messwerte für Personen unterschiedlicher Größe können wahlweise gemittelt werden, um schließlich die anzuwendenden Zuordnungsdaten zu bestimmen.

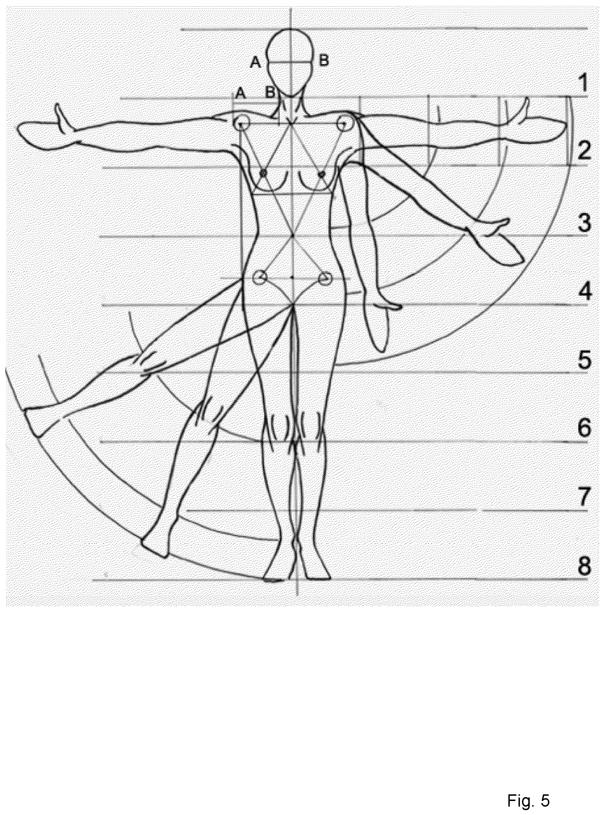

Alternativ oder ergänzend kann vorgesehen sein, die Zuordnungsdaten gemäß Proportionsregeln für den menschlichen Körper zu bestimmen. Fig. 5 zeigt hierzu eine schematische Darstellung. Hierbei wird angenommen, dass ein Mensch in etwa die Höhe (Größe) von acht Köpfen aufweist. Die Kopfhöhe dient so als eine Art Maßeinheit für die Proportionen des Menschen. Die Maßeinheit Kopf verteilt sich über die Länge des Menschen hierbei wie folgt ("Achtelprinzip"): Kopf; von Kinn bis zu den Brustwarzen; von den Brustwarzen bis zum Nabel; vom Nabel bis zum Schritt; vom Schritt bis zur Mitte der Oberschenkel; von der Mitte der Oberschenkel bis knapp unter die Knie; von den Knien bis zur Mitte der Unterschenkel; von der Mitte der Unterschenkel bis zu den Fußsohlen. Hieraus lässt sich für Personen unterschiedlicher Größe jeweils eine Abschätzung für die Zuordnung zwischen der Höhe der Kameraeinrichtung 4 und der zugeordneten Höhe der Fingerabdruckeinrichtung 13 (bei angewinkeltem Unterarm) ableiten.

Es kann vorgesehen sein, die Vorrichtung 1 hinsichtlich der Zuordnungsdaten als lernendes System auszugestalten. Hierbei können anfängliche Zuordnungsdaten bereitgestellt werden, insbesondere in der Speichereinrichtung 18. Anfangs erfolgt die automatisierende Steuerung der Vorrichtung 1 bezüglich der Höhenverstellung von Kameraeinrichtung 4 und Fingerabdruckeinrichtung 13 / Bedienauflage 11 basierend auf den anfänglichen Zuordnungsdaten. Der Person 2 kann sodann die Möglichkeit gegeben werden, eine Höheneinstellung für die Fingerabdruckeinrichtung 13 / die Bedienauflage 11 mittels Benutzereingabe zu verändern, also beispielsweise die Bedienauflage 11 nach oben oder unten zu verstellen, wenn die geänderte Stellung für die Person 2 hinsichtlich des Bedienkomforts bequemer oder angenehmer ist, um die Fingerabdruckeinrichtung 13 zu bedienen. Die anfänglichen Zuordnungsdaten können dann dahingehend geändert werden, dass die von der Person 2 eingestellte Höhe für die Fingerabdruckeinrichtung 13 / die Bedienauflage 11 den anfänglichen Wert für die Referenzhöhe ersetzt. Auf diese Weise kann die Vorrichtung 1 im Verlauf des Betriebs weiter optimiert werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Vorrichtung
- 2: Person
- 3: Gesicht
- 4: Kameraeinrichtung
- 5: Bezugsebene
- 6: Sicht- oder Aufnahmeachse
- 7: Beleuchtungseinrichtung
- 8: Verlagerungseinrichtung
- 9: Ständerbauteil
- 10: Fußbauteil
- 11: Bedienauflage
- 12: Auflagenfläche
- 13: Fingerabdruckeinrichtung
- 14: Unterarm
- 15: Oberarm
- 16: Steuereinrichtung
- 17: Personensensoreinrichtung
- 18: Speichereinrichtung

## Patentansprüche

1. Verfahren zum automatisierten Betreiben einer Vorrichtung (1) zum Erfassen von biometrischen Identifizierungsmerkmalen einer Person (2), aufweisend:
- Bereitstellen einer Vorrichtung (1) zum Erfassen von biometrischen Identifizierungsmerkmalen einer Person (2), welche eine Kameraeinrichtung (4) zum Aufnehmen eines digitalen biometrischen Gesichtsbildes und eine Fingerabdruckeinrichtung (13) zum Erfassen eines digitalen Fingerabdrucks aufweist, wobei die Kameraeinrichtung (4) zum Einstellen einer Aufnahmeposition für das Aufnehmen des digitalen biometrischen Gesichtsbildes und die Fingerabdruckeinrichtung (13) zum Einstellen einer Nutzungsposition für das Erfassen des digitalen Fingerabdrucks mittels einer Verlagerungseinrichtung (8) zumindest hinsichtlich einer jeweiligen Höhe oberhalb einer Bezugsebene (5) und unabhängig voneinander einstellbar sind;
- Verlagern der Kameraeinrichtung (4) mittels der Verlagerungseinrichtung (8) in eine aktuelle Aufnahmeposition, derart, dass zwischen der Kameraeinrichtung (4) und einer der Kameraeinrichtung (4) gegenüberliegend angeordneten Person (2) eine horizontale Sichtachse (6) ausgebildet wird, entlang welcher das digitale biometrische Gesichtsbild für die Person (2) mittels der Kameraeinrichtung (4) aufnehmbar ist;
- Bestimmen einer aktuellen Höhe der Kameraeinrichtung (4) über der Bezugsebene (5) in der aktuellen Aufnahmeposition;
- Bereitstellen von Zuordnungsdaten, welche für eine Vielzahl von Personen unterschiedlicher Größe eine jeweilige größenangepasste Zuordnung zwischen einer Referenzhöhe der Kameraeinrichtung (4) und einer zugeordneten Referenzposition der Fingerabdruckeinrichtung (13) anzeigen;
- Bestimmen einer der aktuellen Höhe der Kameraeinrichtung (4) entsprechenden Referenzhöhe und einer dieser zugeordneten Referenzposition der Fingerabdruckeinrichtung (13) aus den Zuordnungsdaten;
- Verlagern der Fingerabdruckeinrichtung (13) in die zugeordnete Referenzposition mittels der Verlagerungseinrichtung (8) und
- Erfassen des digitalen biometrischen Gesichtsbildes der Person (2) mittels der Kameraeinrichtung (4) und / oder des digitalen Fingerabdrucks der Person (2) mittels der Fingerabdruckeinrichtung (13).

2. Verfahren nach Anspruch 1, **dadurch gekennzeichnet, dass** die aktuelle Höhe der Kameraeinrichtung (4) als der Höhenabstand der horizontalen Sichtachse (6) über der Bezugsebene (5) bestimmt wird, wenn die Kameraeinrichtung (4) in der aktuellen Aufnahmeposition angeordnet ist.

3. Verfahren nach Anspruch 1 oder 2, **dadurch gekennzeichnet, dass** mittels der Zuordnungsdaten der jeweiligen Referenzhöhe der Kameraeinrichtung (4) als Referenzposition zumindest eine Referenzhöhe der Fingerabdruckeinrichtung (13) über der Bezugsebene (5) zugeordnet wird.

4. Verfahren nach Anspruch 3, **dadurch gekennzeichnet, dass**
- der Fingerabdruckeinrichtung (13) eine Bedienauflage der Vorrichtung (1) zum Erfassen von biometrischen Identifizierungsmerkmalen zugeordnet wird, mit welcher der Person (2) zum Erfassen des digitalen Fingerabdrucks eine horizontale Auflagefläche (12) für eine Unterarm- und Handauflage bereitgestellt wird; und
- die zumindest eine Referenzhöhe der Fingerabdruckeinrichtung (13) über der Bezugsebene (5) eingerichtet ist, der Person (2) für das Erfassen des digitalen Fingerabdrucks auf der horizontalen Auflagefläche (12) eine ergonomisch bequeme Unterarm- und Handauflage zu ermöglichen, bei der der relativ zum Oberarm (15) angewinkelte Unterarm (14) der Person (2) im Wesentlichen in horizontaler Richtung verläuft.

5. Verfahren nach Anspruch 4, **dadurch gekennzeichnet, dass** die Vorrichtung (1) zum Erfassen von biometrischen Identifizierungsmerkmalen der Person (2) mit einer Eingabeeinrichtung bereitgestellt wird, welche auf der horizontalen Auflagefläche (12) und / oder benachbart hierzu angeordnet und eingerichtet ist, eine Benutzereingabe der Person (2) zu Erfassen.

6. Verfahren nach mindestens einem der vorangehenden Ansprüche, dadurch **gekenn**- **zeichnet**, dass die Zuordnungsdaten wie folgt bereitgestellt werden:
- mit ersten Zuordnungsdaten, welche Personen unterschiedlicher Größe in stehender Position eine jeweilige größenangepasste Zuordnung zwischen Referenzhöhe der Kameraeinrichtung (4) und zugeordneten Referenzposition der Fingerabdruckeinrichtung (13) bezüglich der Bezugsebene (5) anzeigen; und
- mit zweiten Zuordnungsdaten, welche von den ersten Zuordnungsdaten verschieden sind und Personen unterschiedlicher Größe in sitzender Position eine jeweilige größenangepasste Zuordnung zwischen Referenzhöhe der Kameraeinrichtung (4) und zugeordneten Referenzposition der Fingerabdruckeinrichtung (13) bezüglich der Bezugsebene (5) anzeigen.

7. Verfahren nach mindestens einem der vorangehenden Ansprüche, dadurch **gekenn**- **zeichnet**, dass die Vorrichtung (1) zum Erfassen von biometrischen Identifizierungsmerkmalen der Person (2) mit einem Ständerbauteil bereitgestellt wird, an welchem die Kameraeinrichtung (4), die Fingerabdruckeinrichtung (13) und die Verlagerungseinrichtung (8) angeordnet sind.

8. Verfahren nach mindestens einem der vorangehenden Ansprüche, dadurch **gekenn- zeichnet**, dass die Vorrichtung (1) zum Erfassen von biometrischen Identifizierungsmerkmalen der Person (2) als Kiosk-Terminal bereitgestellt wird.

9. Verfahren nach mindestens einem der vorangehenden Ansprüche, dadurch **gekenn**- **zeichnet**, dass zumindest ein Teil der Zuordnungsdaten im Rahmen einer Messreihe für Personen unterschiedlicher Größe mittels einer Messeinrichtung experimentell bestimmt wird, die eingerichtet ist, die Referenzhöhe für die Kameraeinrichtung (4) und die dieser zugeordnete Referenzposition der Fingerabdruckeinrichtung (13) zu messen.

10. Verfahren nach mindestens einem der vorangehenden Ansprüche, dadurch **gekenn- zeichnet**, dass die Kameraeinrichtung (4) beim Verlagern in die aktuelle Aufnahmeposition derart verlagert wird, dass die horizontale Sichtachse (6) zum Aufnehmen des digitalen biometrischen Gesichtsbildes im Wesentlichen auf Höhe der Augen der Person (2) angeordnet wird.

11. Verfahren nach mindestens einem der vorangehenden Ansprüche, dadurch **gekenn- zeichnet**, dass mittels einer Personensensoreinrichtung (17) eine Annäherung der Person (2) an die Vorrichtung (1) detektiert wird und die Kameraeinrichtung (4) als Reaktion hierauf mittels der Verlagerungseinrichtung (8) in die aktuelle Aufnahmeposition verlagert wird.

12. Vorrichtung (1) zum Erfassen von biometrischen Identifizierungsmerkmalen einer Person (2), aufweisend:
- eine Kameraeinrichtung (4) zum Aufnehmen eines digitalen biometrischen Gesichtsbildes;
- eine Fingerabdruckeinrichtung (13) zum Erfassen eines digitalen Fingerabdrucks aufweist und
- eine Verlagerungseinrichtung (8), wobei die Kameraeinrichtung (4) zum Einstellen einer Aufnahmeposition für das Aufnehmen des digitalen biometrischen Gesichtsbildes und die Fingerabdruckeinrichtung (13) zum Einstellen einer Nutzungsposition für das Erfassen des digitalen Fingerabdrucks mittels der Verlagerungseinrichtung (8) zumindest hinsichtlich einer jeweiligen Höhe oberhalb einer Bezugsebene (5) und unabhängig voneinander einstellbar sind;
wobei die Vorrichtung (1) für Folgendes eingerichtet ist:
- Verlagern der Kameraeinrichtung (4) mittels der Verlagerungseinrichtung (8) in eine aktuelle Aufnahmeposition, derart, dass zwischen der Kameraeinrichtung (4) und einer der Kameraeinrichtung (4) gegenüberliegend angeordneten Person (2) eine horizontale Sichtachse (6) ausgebildet wird, entlang welcher das digitale biometrische Gesichtsbild für die Person (2) mittels der Kameraeinrichtung (4) aufnehmbar ist;
- Bestimmen einer aktuellen Höhe der Kameraeinrichtung (4) über der Bezugsebene (5) in der aktuellen Aufnahmeposition;
- Bereitstellen von Zuordnungsdaten, welche für eine Vielzahl von Personen unterschiedlicher Größe eine jeweilige größenangepasste Zuordnung zwischen einer Referenzhöhe der Kameraeinrichtung (4) und einer zugeordneten Referenzposition der Fingerabdruckeinrichtung (13) anzeigen;
- Bestimmen einer der aktuellen Höhe der Kameraeinrichtung (4) entsprechenden Referenzhöhe und einer dieser zugeordneten Referenzposition der Fingerabdruckeinrichtung (13) aus den Zuordnungsdaten;
- Verlagern der Fingerabdruckeinrichtung (13) in die zugeordnete Referenzposition mittels der Verlagerungseinrichtung (8) und
- Erfassen des digitalen biometrischen Gesichtsbildes der Person (2) mittels der Kameraeinrichtung (4) und / oder des digitalen Fingerabdrucks der Person (2) mittels der Fingerabdruckeinrichtung (13).
